# EUROPEAN PATENT SPECIFICATION

(11) **EP 1 536 968 B1**
(45) Date of publication and mention of the grant of the patent: **25.02.2009**
(21) Application number: 03738858.4
(22) Date of filing: 14.07.2003
(51) Int. Cl.: B60K 15/077

(54) **FUEL TANK**
KRAFTSTOFFBEHÄLTER
RESERVOIR A CARBURANT

(30) Priority: 19.07.2002 SE 0202268
(43) Date of publication of application: 08.06.2005
(73) Proprietor: VOLVO LASTVAGNAR AB, 405 08 Göteborg (SE)
(72) Inventor: OHLSSON, Rolf, S-450 34 Fiskebäckskil (SE); SONDEREGGER, Sigurd, S-436 40 Askim (SE)
(74) Representative: Mossmark, Anders Lennart
(86) International application number: PCT/SE2003/001205
(87) International publication number: WO 2004/009391

(56) References cited:
- EP-A1- 0 803 394
- DE-C- 861 969
- FR-A1- 2 679 840
- US-A- 4 331 342
- US-A- 4 526 286
- US-B1- 6 293 420

## Description

### TECHNICAL FIELD OF THE INVENTION

The present invention relates to a fuel tank according to the preamble of appended claim 1.

### TECHNICAL BACKGROUND

Fuel tanks intended, for example, for vehicles are usually partitioned into sections with intermediate walls in order to prevent the fuel from sloshing around in the tank when driving and, for example, when braking due to the risk that the fuel level will be changed so much that it falls below the opening of the outlet pipe. When a vehicle is in a slope and the fuel level is low, it can however still end up below the opening of the outlet pipe, with the consequence that the engine stops. EP 0803394 discloses such a tank.

### SUMMARY OF THE INVENTION

The purpose of the present invention is to obtain a fuel tank in which the above described disadvantage is reduced.

Said purpose is obtained by a fuel tank according to the present invention, the characteristics of which will be evident from appended claim 1.

With the fuel tank according to the invention, the fuel is retained where the outlet organ is positioned, so that the influence of the fuel level is reduced when and the vehicle is at an angle and the risk of operational interruptions is reduced.

### DESCRIPTION OF THE DRAWINGS

The invention will be described in closer detail with reference to two embodiments, in which
- Fig. 1: schematically shows a longitudinal cross section in a fuel tank in a first embodiment,
- Fig. 2: is an enlarged partial view of a portion of an intermediate wall of the fuel tank,
- Fig. 3: is a cross section of the fuel tank along the line III-III in Fig. 1,
- Fig. 4: schematically shows a longitudinal cross section through a fuel tank in a second embodiment in a horizontal position,
- Fig. 5: shows the same fuel tank, but in a sloping position and
- Fig. 6: shows a cross section through the fuel tank along the line VI-VI in Fig. 5.

### PREFERRED EMBODIMENTS

For the sake of simplicity, the figures only show a fuel tank as such. The tank is intended to be arranged in a motor vehicle, primarily a truck, in order to during operation provide its engine with fuel. The tank is normally elongate, and suspended by means of not shown consoles on the outside of the one main beam in the vehicle frame, on the right or left hand side. The tank is normally horizontally positioned when the vehicle is in a horizontal position.

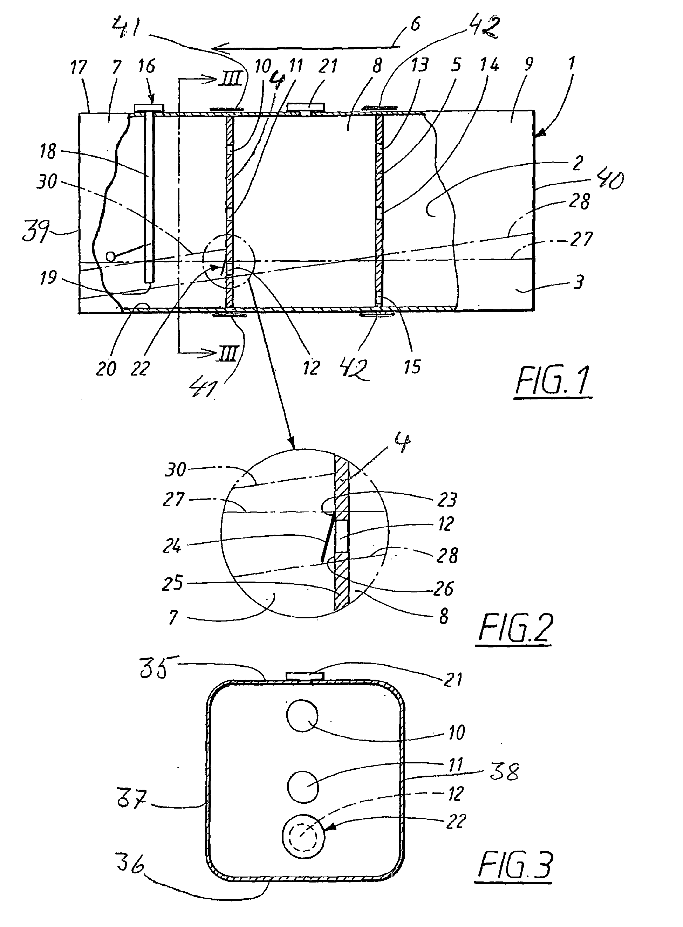

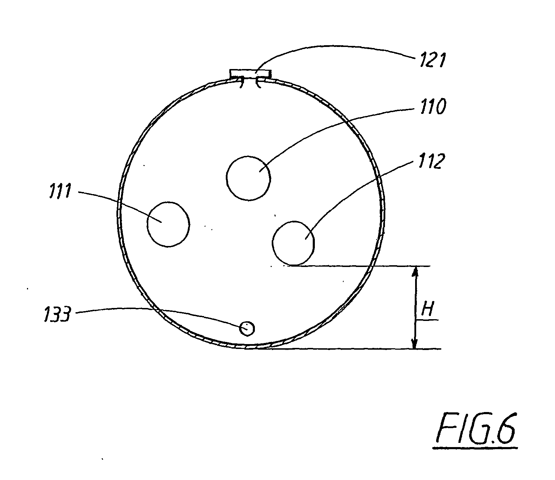

With reference first to Fig. 1, 2 and 3 which show the first embodiment, it will become evident that the fuel tank according to the invention consists of a tank housing 1 which encapsulates a space 2 for fuel 3 in liquid form. The fuel tank is in sections, i.e. partitioned in a number of sections by means of one or several intermediate walls or partitioning walls, in the example shown partitioning walls 4, 5 which extend across the fuel tank i.e. at a straight angle to the longitudinal direction of the fuel tank, as indicated by the arrow 6 which usually corresponds to the driving direction of the vehicle. The partitioning walls 4, 5 partition the fuel tank in sections/a plurality of sections or fuel chambers 7, 8, 9 which in the example shown thus are three. The tank housing 1 is delimited outwards by casing walls, in the first example an upper wall 35, a lower wall 36 (the bottom) and side walls 37, 38 and two gable walls 39, 40. In each partitioning wall 4, 5 there is arranged one whole or through-going opening, in the example there are three openings 10-15, of which the uppermost, two are always open, so that the chambers on each side of the partitioning wall are in connection with each other and permit the flow of fuel in both directions. The partitioning walls 4, 5 also have a stiffening influence on the casing walls 36, 36, 37 of the tank housing 1, whether the tank is box shaped as in the embodiment in Fig. 3, or cylindrical as in the embodiment of Fig. 6 or a combination of these. Advantageously, the partitioning walls are in direct contact with the casing walls all around. Also, there are fastening devices such as consoles with tightening bands 41, 42, see Fig. 1, arranged in front of the partitioning walls 4, 5, i.e. where the tank is at its stiffest.

In one of the chambers, in the example the forward chamber 7 as seen in the driving direction, there is arranged an outer organ 16 which is arranged on top of the top side 17 of the tank, where the external fuel pipe to the engine which is to be driven with the fuel is attached to the outlet organ, usually referred to as tank armature, which also comprises a sensor for the fuel level. In the outlet organ 16 there is comprised a suction pipe 18, which protrudes downwards in the centre 7 and ends downwards with an outlet opening 19 for the fuel. The opening is positioned slightly above the bottom in order to avoid bottom sediment condensed water or other undesirable substances to be sucked up into the suction pipe which communicates with the external fuel pipe. The suction is obtained by means of a not shown fuel pump. Furthermore, the tank is provided with filling organs 21 in the form of a closeable filling opening provided with a tank lid. The filling organ is, in the example shown, positioned on the top of the tank and can also be oriented towards the upper, outer, elongate corner portion of the tank. In the example shown, the filling organ 21 for fuel is positioned above the middle chamber, which means that the filling is carried out first in this chamber, following which fuel flows via the openings 10, 15 over to the two other chamber 7, 9.

According to the invention, a bottom opening 12 in at least one of the partitioning walls 4 is provided with a clack valve 22, which is thus arranged to permit flow in only one of the directions from the one chamber 8 to the other chamber 7, but to block or at least severely restrict flow through this opening to this opposite direction. The back valve is turned so that it permits flow in the direction in towards the chamber 7, where the outer organ 16 is positioned, i.e. in the example shown from the intermediate chamber 8 to one of the outer chambers 7, in the example shown the front chamber.

Fig. 2 in more detail shows a simple example of the embodiment of the clack valve in the shape of a pivotally arranged valve 24 arranged above the opening 12 in a point 23, which valve is of such shape and size that it can close the opening entirely when it swings down towards that side 25 of the partitioning wall 24, which faces the chamber 7. The valve can be a completely sealing covering disk which is dimensioned and positioned to cover the opening 12, and is thus arranged to be able to be in contact with the circumference edge 26 around the opening 12, i.e. overlapping the edge 26 and by means of the pressure difference on the two sides and the valve so that the tendency towards rearwards flow is prevented, i.e. in the backwards direction from the chamber 7 to the chamber 8. In the case of flow in the opposite direction, from the chamber 8 to the chamber 7, the valve 24 opens due to overpressure in the chamber 8 and thus towards the opening 12. In a static position or resting position, the clack valve 22, is closed, i.e. the valve 24 hangs down and seals against the circumference edge 26. The circumference edge 26 is in its entirety shaped by the partitioning wall 4, i.e. the circumference edge 26 at the bottom 20 of the tank is at a distance from this, so that the valve 24 exclusively seals against the partitioning wall 4 and not against the bottom, by means of which sealing is also ensured in case of a deformation of the bottom.

In the example shown in Figs. 1-3, the bottom edge of the lower opening 12 is positioned essentially at the same level as the outlet opening 19 of the outlet organ, or just above this level. When the fuel tank is in the horizontal position or in an essentially horizontal position, there are no problems with fuel feeding out of the tank so long as the fuel, shown by means of a horizontally dotted line 27, is above the outlet opening 19. In the case of a fuel tank which does not have a clack valve, according to the invention, the fuel level 28 easily drops below the outlet opening 19, with operational interruptions as a consequence. The sloping dotted line 28 illustrates this.

When the fuel tank according to the invention, with the same low fuel level as mentioned above, bends upwards, i.e. when the vehicle is an upwards slope as seen in the direction of travel 6, the clack valve 22 is kept closed due to the influence of the fuel pressure in the fuel chamber 7. This prevents the fuel in a fuel chamber 7, already from the beginning of the slope, to flow over to the two other fuel chambers 8, 9 and stops in the front fuel chamber, and maintains in the area around the suction pipe 18 an unchanged level, indicated by the upper leaning dotted line 30. This unchanged line occurs on the condition that the suction pipe 18 is positioned essentially symmetrically in the fuel chamber 7 as regards at least the longitudinal direction of the chamber as shown in Fig. 1. Regardless of the position of the suction pipe in the fuel chamber, the fuel level will, due to the clack valve, be kept at a higher level than would have been the case if there had been no clack valve which reduces the risk of the outlet opening 19 being above the fuel level.

When the vehicle moves on an essentially horizontal road i.e. when the fuel tank is in an essentially horizontal position, or when the vehicle is positioned in a downwards slope as seen in the direction of travel, fuel can freeely flow between the fuel chambers, by means of the clack valve 22 being kept open so that fuel can continuesly flow over to the front fuel chamber where the outlet organ is positioned, which is a necessary condition for utilisation of the fuel in the other chambers.

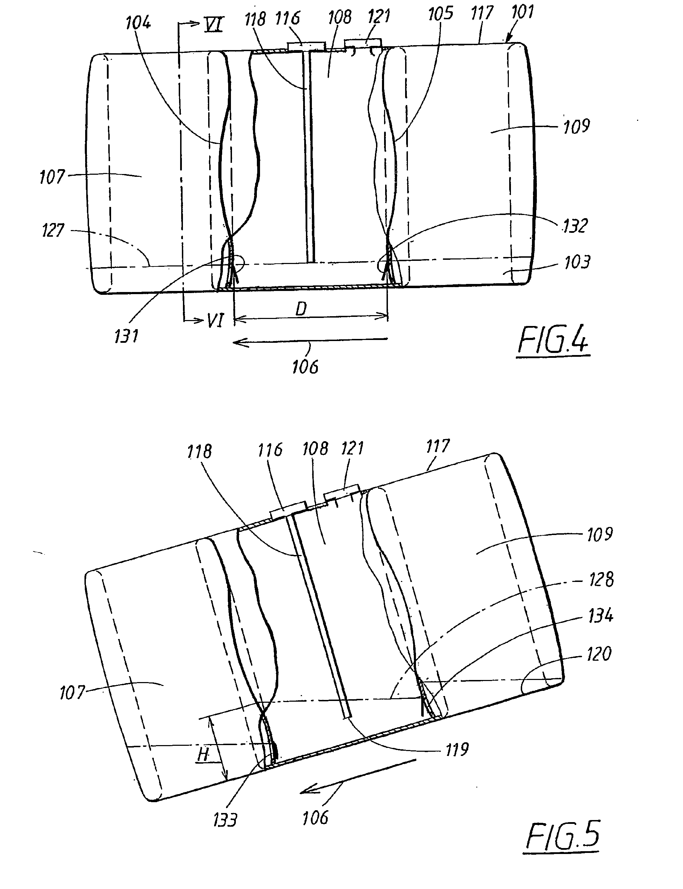

In the second embodiment according to Figs. 4, 5 and 6, those parts which correspond to the parts according the first embodiments have been given corresponding reference numerals, with the addition of 100. Thus, the fuel tank according to the second embodiment consists of a tank housing 101 which encapsulate a space 102 for the fuel 103. This fuel tank is also sectioned, i.e. partitioned into a number of sections by means of partitioning walls, in the example shown two partitioning walls 104, 105, which extend across the fuel tank i.e. perpendicularly to the longitudinal direction of the fuel tank as indicated by the arrow 106, which corresponds to the direction of travel of the vehicle. In this example, it will be come clear that the partitioning walls can be bent in order to better resist pressure differences between the three sections or fuel chambers 107, 108, 109, which are usually also referred to as sloshing walls. The fuel chambers 7, 8 and 9 are in a certain degree of communication with each other via large holes 10-15 in the partitioning walls at different levels in each wall, for example three holes in each wall, shown in the cross section in Fig. 6. These holes are in this example continuously open, and are relatively large in order to freely permit flow of fuel between the chambers on the condition that the fuel level reaches up to each opening.

The outlet organ 116 is attached to the tank on its topside 117, and is there connected to the fuel pipe, which via a not shown fuel pump, leads it to the engine which is fuelled by means of the fuel in the tank. From the fuel tank there is a stiff suction pipe 18, which protrudes downwards into the tank to a level where the pipe ends with an opening 19 a distance above the bottom 120 of the tank. In practise, the opening can consist of several smaller openings, which can be directed sideways at the lower end of the pipe and be comprised in a fuel filter in order to prevent that particles are swept along which might be on the bottom of the tank. To this end, the opening 119 is thus not arranged immediately at the bottom. The filling organ 121 is placed at a higher level of the tank, in the example shown in the same fuel chamber as the outer organ 116. In this case, both the outlet organ and the filling organ 121 are placed in the middle fuel chamber, but can in principle be placed in any of the other chambers and also in different chambers. The advantage of symmetrically, centrally placed outer organs 116, is that the same tank can be placed either to the right or the left of the vehicle with the same length of the fuel conduit. It can in this context be an advantage that the filling organ also is centrally placed.

According to the invention, the fuel tank is also in the second embodiment provided with organs to permit the flow of fuel at a low level through the respective partitioning walls 104, 105 in one of the directions from a chamber to a adjacent chamber, but to block or severely limit the flow in the opposite direction. In the second embodiment, there are arranged clack valves 131, 132 in the two partitioning walls 104, 105. These are also arranged in separate openings 133, 134 at a lower position in a respective partitioning wall, i.e. below the other openings 110, 111, 112. The clack valves can in their simplest embodiment be designed in the same way as in the first embodiment i.e. in the form of a pivotally suspended valve 124 in a point 123 above the opening which is arranged to, in closed position, seal the entire opening 133, 134, but to swing outwards in the case of overpressure of the opposite side of the partitioning wall.

When driving on an essentially horizontal road, which is shown in Fig. 4 with an essentially horizontal fuel level 127, fuel is permitted to flow from the two outer fuel chambers 107, 109 to the intermediate chamber 108 where the outlet organ 116 is positioned. When the vehicle leans in its longitudinal direction in either direction of slope, for example with a slope according to Fig. 5 as indicated by the arrow 106, the fuel attempts to flow to the lowermost part of the fuel tank. Due to the pressure difference on the two sides of the clack valve in the lowermost positioned partitioning wall 104, the clack valve 101 is kept closed, while the clack valve 132 is kept open. This means that the fuel is prevented from flowing from the middle fuel chamber to the lower fuel chamber 127 as soon as the slope begins, while fuel is still permitted to flow from the uppermost fuel chamber 109 to the middle fuel chamber. This ensures that the fuel level 128 at the outlet opening 119 is at a level at least not lower than the level of the horizontal position, but is even at a slightly higher level.

Crucial parameters for the fuel level are:
- the through flow of the clack valve of the respective opening 133, 134 in the respective partitioning walls 104, 105, which must be below the fuel consumption of the engine i.e. the flow in the outlet organ 116
- the height H from the bottom of the tank 120 to the lower most part of the larger through flowing holes 112
- the distance D between the partitioning walls 104, 105.

Another advantage with the second embodiment is that a very limited filling of an empty tank will give a better degree of utilisation of the volume available, since the clack valves 131, 132 when filling in the horizontal position are kept closed, and that through flow does not take place until the fuel level reaches the most large overflow opening 112.

The invention is not limited to the above described and in the drawings shown embodiments but can be varied within the scope of the appended claims.

For example, there can be a number of intermediate walls arranged, or even one single partitioning wall, in which case the fuel is divided into two fuel chambers, but there can also be more than two partitioning walls. For example, there can be two or three partitioning walls. The filling organ can in principle be positioned in any of the fuel chambers, i.e. alternatively either of the outer chambers. In a tank with three partitioning walls, four chambers are obtained two outer chambers or intermediate chambers, in which the filling organ can be positioned, either in one of the outer chambers or one of the intermediate chambers.

The larger overflow holes can be positioned and arranged in a manner different than that which has been shown. Above, there has been shown an example of an essentially rectangular cross section and a circular cross section respectively, but it is also possible to combine the two shapes so that there is an asymmetrical cross section of shape, for example an essentially rectangular cross section of shape of one side of a vertical axis of symmetry, and a semicircular cross sectional shape on the other side. The partitioning walls can be oblique, and directed and shaped in another way.

The expression casing wall/s of the tank refers to that or those walls which encapsulate the tank with the exception of the gable walls i.e. regardless of shape. Furthermore, the tank housing is manufactured in a material of even thickness such as steel plating, preferably stainless steel, but plastic tanks with a homogenous wall thickness are also possible.

## Claims

1. A fuel tank for motor vehicles, in a the form of a tank housing (1) which encapsulates a fuel space (2), which is divided by at least one lateral stiffening partitioning wall (4, 5/104, 105) into at least two fuel chambers (7, 8, 9/107, 108, 109), which are arranged to communicate with each other via openings (10-15/110-115, 133, 134) in the partitioning wall or walls, with the tank exhibiting an outlet organ (16) with a chosen position in one of the fuel chambers, and in at least one of the openings between the fuel chambers there is arranged a clack valve (22/122), **characterized in that** the opening (12) or the openings (133, 134) with the clack valve (22, 122) are delimited circumferentially by means of an opening edge (26) which is arranged in the partitioning wall with a distance to the bottom (20/120) of the tank, and with the clack valve being arranged to permit flow to the fuel chamber (107, 108) with the outlet organ (16/116), but to completely or partially prevent flow in the opposite direction, so that if the tank is in a slope in its longitudinal direction, fuel will be retained in the fuel chamber where the outlet organ is positioned.

2. A fuel tank according to claim 1, **characterized in that** at least one opening (10-11, 13-15) is open for flow in both directions in each partitioning wall (24/104, 105) and is arranged at a chosen height (2) above the bottom (20/120) of the tank, and **in that** in a lower opening below said opening, the clack valve (22/122) is arranged.

3. A fuel tank according to claim 2, provided with two partitioning walls (4, 5) **characterized in that** only the lower opening (12) in one of the partitioning walls (24) is provided with the clack valve (22) and with the outer organ (16) being positioned in the outer chamber (7) which is delimited by the partitioning wall with a clack valve.

4. A fuel tank according to claim 1, provided with two partitioning walls (104, 105), **characterized in that** the lower openings (133, 134) in the two partitioning walls (104, 105) are provided with clack valves (131, 132) which are arranged to permit flow from the outer chambers (7, 9) to the middle chamber (108) where the outer organ (116) is positioned.

5. A fuel tank according to claim 4, **characterized in that** the filling organs (121) of the tank is connected to the tank housing (1) at either of the outer chambers (7, 9).

6. A fuel tank according to claim 2, provided with three partitioning walls, **characterized in that** the lower openings in all three partitioning walls are provided with clack valves which are arranged to allow flow from the outer chambers to the chamber where the outlet organ is positioned.

7. A fuel tank according to claim 2, provided with four partitioning walls, **characterized in that** the lower openings in all four partitioning walls are provided with clack valves, which are arranged to allow flow to the chamber where the outer organ is positioned.

8. A fuel tank according to claim 3, 4 6 or 7, **characterized in that** the filling organ (121) of the tank is connected to the tank housing (1) in the middle chamber (108).

9. A fuel tank according to any of the previous claims, **characterized in that** in each partitioning wall there are arranged two openings which permit flow in both directions.

10. A fuel tank according to claim 1, **characterized in that** a lower opening (133) is provided with a clack valve while three of the openings (110, 111, 112) permit flow in both directions and are positioned at different heights.

11. A fuel tank according to any of the previous claims, in which the tank is attached to the frame of the vehicle by means of fastening devices and in that the tank exhibits at least two partitioning walls, **characterized in that** the fastening devices (41, 42) extend around the tank at the positions of at least two of the partitioning walls (4, 5/104, 105).

## Patentansprüche

1. Treibstofftank für Motorfahrzeuge in der Form eines Tankgehäuses (1), das einen Treibstoffraum (2) abkapselt, der durch zumindest eine seitliche versteifende Teilungswand (4, 5/104, 105) in zumindest zwei Treibstoffkammern (7, 8, 9/107, 108, 109) geteilt ist, die angeordnet sind, um miteinander über Öffnungen (10-15/110-115, 133, 134) in der Teilungswand oder den Teilungswänden zu kommunizieren, wobei der Tank ein Auslassorgan (16) mit einer gewählten Position in einer der Treibstoffkammern aufweist und in zumindest einer der Öffnungen zwischen den Treibstoffkammern ein Klappenventil (22/122) angeordnet ist, **dadurch gekennzeichnet, dass** die Öffnung (12) oder die Öffnungen (133, 134) mit dem Klappenventil (22, 122) umfangseitig durch eine Öffnungskante (26) begrenzt sind, die in der Teilungswand in einem Abstand zum Boden (20/120) des Tanks angeordnet ist, und wobei das Klappenventil angeordnet ist, um einen Fluss zu der Treibstoffkammer (107, 108) mit dem Auslassorgan (16/116) zu erlauben, aber einen Fluss in die entgegen gesetzte Richtung vollständig oder teilweise zu verhindern, so dass Treibstoff in der Treibstoffkammer gehalten wird, wo das Auslassorgan positioniert ist, wenn der Tank in seiner Längsrichtung geneigt ist.

2. Treibstofftank nach Anspruch 1, **dadurch gekennzeichnet, dass** zumindest eine Öffnung (10-11, 13-15) für einen Fluss in beide Richtungen in jeder Teilungswand (24/104, 105) offen ist und in einer gewählten Höhe (2) oberhalb des Bodens (20/120) des Tanks angeordnet ist und dass in einer niedrigeren Öffnung unterhalb der Öffnung das Klappenventil (22/122) angeordnet ist.

3. Treibstoff nach Anspruch 2, versehen mit zwei Teilungswänden (4, 5), **dadurch gekennzeichnet, dass** nur die niedrigere Öffnung (12) in einer der Teilungswände (24) mit dem Klappenventil (22) versehen ist, und wobei das Auslassorgan (16) in der äußeren Kammer (7) positioniert ist, die durch die Trennungswand mit einem Klappenventil begrenzt ist.

4. Treibstofftank nach Anspruch 1, versehen mit zwei Teilungswänden (104, 105), **dadurch gekennzeichnet, dass** die unteren Öffnungen (133, 134) in den zwei Teilungswänden (104, 105) mit Klappenventilen (131, 132) versehen sind, die angeordnet sind, um einen Fluss von den äußeren Kammern (7, 9) zu der mittleren Kammer (108), wo das Auslassorgan (116) positioniert ist, zu ermöglichen.

5. Treibstofftank nach Anspruch 4, **dadurch gekennzeichnet, dass** das Füllorgan (121) des Tanks mit dem Tankgehäuse (1) an einer der äußeren Kammern (7, 9) verbunden ist.

6. Treibstofftank nach Anspruch 2, versehen mit drei Teilungswänden, **dadurch gekennzeichnet, dass** die unteren Öffnungen in allen drei Teilungswänden mit Klappenventilen versehen sind, die angeordnet sind, um einen Fluss von den äußeren Kammern zu der Kammer, wo das Auslassorgan positioniert ist, zu ermöglichen.

7. Treibstofftank nach Anspruch 2, versehen mit vier Teilungswänden, **dadurch gekennzeichnet, dass** die unteren Öffnungen in allen vier Teilungswänden mit Klappenventilen versehen sind, die angeordnet sind, um einen Fluss zu der Kammer, wo das Auslassorgan positioniert ist, zu ermöglichen.

8. Treibstofftank nach Anspruch 3, 4, 6 oder 7, **dadurch gekennzeichnet, dass** das Füllorgan (121) des Tanks mit dem Tankgehäuse (1) in der mittleren Kammer (108) verbunden ist.

9. Treibstofftank nach einem der vorstehenden Ansprüche, **dadurch gekennzeichnet, dass** in jeder Teilungswand zwei Öffnungen angeordnet sind, die einen Fluss in beide Richtungen ermöglichen.

10. Treibstofftank nach Anspruch 1, **dadurch gekennzeichnet, dass** eine niedrigere Öffnung (133) mit einem Klappenventil versehen ist, während drei der Öffnungen (110, 111, 112) einen Fluss in beide Richtungen ermöglichen und in verschiedenen Höhen positioniert sind.

11. Treibstofftank nach einem der vorstehenden Ansprüche, bei dem der Tank an dem Rahmen eines Fahrzeugs durch Befestigungsvorrichtungen befestigt ist und bei dem der Tank zumindest zwei Teilungswände aufweist, **dadurch gekennzeichnet, dass** sich die Befestigungsvorrichtungen (41, 42) an den Positionen von zumindest zwei der Teilungswände (4, 5/104, 105) um den Tank erstrecken.

## Revendications

1. Réservoir de carburant pour véhicules à moteur, sous la forme d'un carter de réservoir (1) qui encapsule un espace pour carburant (2), qui est divisé par au moins une paroi de cloisonnement raidisseuse latérale (4, 5/104, 105) en au moins deux chambres de carburant (7, 8, 9/107, 108, 109), qui sont agencées pour communiquer l'une avec l'autre par l'intermédiaire d'ouvertures (10-15/110-115, 133, 134) dans la paroi ou les parois de cloisonnement, le réservoir présentant un organe de sortie (16) ayant une position choisie dans une des chambres de carburant, et dans au moins une des ouvertures entre les chambres de carburant est agencée une soupape à clapet (22/122), **caractérisé en que** l'ouverture (12) ou les ouvertures (133, 134) ayant la soupape à clapet (22, 122) sont délimitées circonférentiellement par l'intermédiaire d'un bord d'ouverture (26) qui est agencé dans la paroi de cloisonnement qui est à une distance jusqu'au fond (20/120) du réservoir, et la soupape à clapet étant agencée pour permettre un écoulement vers la chambre de carburant (107, 108) avec l'organe de sortie (16/116), mais pour empêcher complètement ou partiellement un écoulement dans la direction opposée, de sorte que si le réservoir est en pente dans sa direction longitudinale, le carburant sera retenu dans la chambre de carburant où l'organe de sortie est positionné.

2. Réservoir de carburant selon la revendication 1, **caractérisé en ce qu'**au moins une ouverture (10-11, 13-15) est ouverte vis-à-vis d'un écoulement dans deux directions dans chaque paroi de cloisonnement (24/104, 105) et est agencée à une hauteur choisie (2) au-dessus du fond (20/120) du réservoir, et **en ce que** dans une ouverture inférieure située en dessous de ladite ouverture, la soupape à clapet (22/122) est agencée.

3. Réservoir de carburant selon la revendication 2, muni de deux parois de cloisonnement (4, 5) **caractérisé en ce que** seule l'ouverture inférieure (12) dans l'une des parois de cloisonnement (24) est munie de la soupape à clapet (22) et l'organe extérieur (16) est positionné dans la chambre extérieure (7) qui est délimitée par la paroi de cloisonnement ayant une soupape à clapet.

4. Réservoir de carburant selon la revendication 1, muni de deux parois de cloisonnement (104, 105) **caractérisé en ce que** les ouvertures inférieures (133, 134) des deux parois de cloisonnement (104, 105) sont munies de soupapes à clapet (131, 132) qui sont agencées pour permettre un écoulement à partir des chambres extérieures (7, 9) vers la chambre médiane (108) où l'organe extérieur (116) est positionné.

5. Réservoir de carburant selon la revendication 4, **caractérisé en ce que** l'organe de remplissage (121) du réservoir est relié au carter de réservoir (1) au niveau de l'une ou l'autre des chambres extérieures (7, 9).

6. Réservoir de carburant selon la revendication 2, muni de trois parois de cloisonnement, **caractérisé en ce que** les ouvertures inférieures des trois parois de cloisonnement sont munies de soupapes à clapet qui sont agencées pour permettre un écoulement à partir des chambres extérieures vers la chambre où l'organe de sortie est positionné.

7. Réservoir de carburant selon la revendication 2, muni de quatre parois de cloisonnement, **caractérisé en ce que** les ouvertures inférieures de la totalité des quatre parois de cloisonnement sont munies de soupapes à clapet, qui sont agencées pour permettre un écoulement vers la chambre où l'organe extérieur est positionné.

8. Réservoir de carburant selon la revendication 3, 4, 6 ou 7, **caractérisé en ce que** l'organe de remplissage (121) du réservoir est relié au carter de réservoir (1) dans la chambre médiane (108).

9. Réservoir de carburant selon l'une quelconque des revendications précédentes, **caractérisé en ce que** dans chaque paroi de cloisonnement sont agencées deux ouvertures qui permettent un écoulement dans deux directions.

10. Réservoir de carburant selon la revendication 1, **caractérisé en ce qu'**une ouverture inférieure (133) est munie d'une soupape à clapet alors que trois des ouvertures (110, 111, 112) permettent un écoulement dans deux directions et sont positionnées à des hauteurs différentes.

11. Réservoir de carburant selon l'une quelconque des revendications précédentes, dans lequel le réservoir est fixé sur le châssis de véhicule par l'intermédiaire de dispositifs de fixation et le réservoir présente au moins deux parois de cloisonnement, **caractérisé en ce que** les dispositifs de fixation (41, 42) s'étendent autour du réservoir au niveau des positions des au moins deux parois de cloisonnement (4, 5/104, 105).
